(19) Europäisches Patentamt
European Patent Office
Office européen des brevets

(11) **EP 3 482 198 B1**

(12) **EUROPEAN PATENT SPECIFICATION**

(45) Date of publication and mention
of the grant of the patent:
**09.09.2020 Bulletin 2020/37**

(51) Int Cl.:
*G01N 29/024* <sup>(2006.01)</sup>   *G01N 29/30* <sup>(2006.01)</sup>
*G01N 29/44* <sup>(2006.01)</sup>   *G01H 5/00* <sup>(2006.01)</sup>

(21) Application number: **17735478.4**

(22) Date of filing: **03.07.2017**

(86) International application number:
**PCT/EP2017/066420**

(87) International publication number:
**WO 2018/007278 (11.01.2018 Gazette 2018/02)**

(54) **METHOD FOR DETECTING A MALFUNCTION OF AN ULTRASONIC FLUID SENSING SYSTEM**

VERFAHREN ZUR ERKENNUNG EINER FEHLFUNKTION EINES AKUSTISCHEN
FLUID-ERFASSUNGSSYSTEMS

PROCÉDÉ POUR LA DÉTECTION D'UN DYSFONCTIONNEMENT D'UN SYSTÈME DE DÉTECTION
DE FLUIDE ULTRASONORE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2016 US 201662358455 P
23.08.2016 EP 16185336**

(43) Date of publication of application:
**15.05.2019 Bulletin 2019/20**

(73) Proprietor: **Plastic Omnium Advanced Innovation
and Research
1130 Bruxelles (BE)**

(72) Inventors:
• **KIM, Tae Kyung
Troy, Michigan 48098 (US)**
• **NAHED, Charbel
Rochester, Michigan 48307 (US)**

(74) Representative: **LLR
11 boulevard de Sébastopol
75001 Paris (FR)**

(56) References cited:
**EP-A1- 2 749 747**    **WO-A1-2014/090848**
**DE-A1-102006 013 263**

## Description

### Field of the Invention

The present invention relates to fluid sensing systems and, more particularly to systems for determining the quality/concentration and the level of a fluid mixture within a tank of a vehicle. For example, the fluid mixture may be an aqueous urea solution stored in a tank of an SCR (selective catalytic reaction) system or a fuel mixture stored in a tank on board a vehicle. More precisely, the invention relates to a method for detecting a malfunction of such systems.

### Background of the Invention

US8733153B2 discloses a dual-sensing system for determining both a quality and a level of a urea solution in a vehicle tank. The dual-sensing system includes two piezoelectric ultrasonic transducers. A quality transducer is positioned to reflect ultrasonic sound waves off a reflector and a level transducer is positioned to reflect ultrasonic sound waves off a surface of the urea solution. US8733153B2 further discloses on-board diagnostics (OBD)

configured to detect an error condition based on an incorrect calculated speed of sound through the fluid. This document does not, however, describe how a malfunction of the quality transducer can be detected in order to avoid relying on erroneous measurements in the event of a malfunction of the quality transducer.

### Summary of the Invention

It is an object of the invention to provide a method for verifying the plausibility (i.e. detecting a malfunction) of a quality sensor of a dual-sensing system.

According to a first aspect of the invention, it is provided a method for detecting a malfunction of a dual-sensing system for sensing a fluid mixture stored in a tank of a vehicle, the dual-sensing system being able to provide values of two physical quantities, i.e. one quantity indicative of a concentration of a constituent of the fluid mixture within the tank and one quantity indicative of a level of the fluid mixture within the tank. The dual-sensing system comprises:

- a first ultrasound subsystem for determining the value of the physical quantity indicative of the concentration of the constituent of the fluid mixture; and
- a second ultrasound subsystem for determining, based on the value provided by the first ultrasound subsystem, the value of the physical quantity indicative of the level of the fluid mixture within the tank.

The first ultrasound subsystem is sometimes called « concentration sensor » or « quality sensor », although it does not necessarily provide a concentration measure, nor a quality measure. The second ultrasound subsystem is sometimes called « level sensor », although it does not necessarily provide a level measure.

The method of the invention comprises the steps of:

- when key is off: memorizing the last known value of a first physical quantity out of the two physical quantities and the last known value of a second physical quantity out of the two physical quantities;
- when key is on, sequentially:

  - having new values of the two physical quantities provided by the dual-sensing system;
  - if the last known value of the first physical quantity is not the same as the new value of the first physical quantity, stop the carrying out of the method;
  - if the last known value of the first physical quantity is the same as the new value of the first physical quantity and if the last known value of the second physical quantity is not the same as the new value of the second physical quantity, emitting a signal indicative of malfunctioning;
  - otherwise, optionally, emitting a signal indicative of plausible functioning.

In the instant invention, « when key is on » means the time following the start of the engine. « when key is off » means the time following the stop of the engine. « Key on » designates the operation of igniting the engine. « Key off » designates the operation of shutting off the engine.

According to a first embodiment of the invention, the physical quantity indicative of the concentration is the concentration itself and the physical quantity indicative of the level is the level itself.

In a first variant of this embodiment, the steps of the method are carried out in this manner:

- when key is off: memorizing the last known concentration and last know level of the fluid mixture within the tank;
- when key is on:

  a) having a new level determined by the dual-sensing system;
  b) if the new level and memorized last known level are not the same, stop the carrying out of the method;
  c) having a new concentration value determined by the first ultrasound subsystem;
  d) if the last known concentration value and new concentration value are not the same, emitting a malfunction signal indicative of a malfunction.

The signal emitted can be sent to a central engine control unit (ECU) to inform the user of the car and to invite him to have it fixed shortly.

According to the invention, two values are not the same if they do not fall in a same range specified by a tolerance value. For instance, the new level and last know level not being the same means that they differ from at least **4%** of the smallest value. As well, the new concentration value and last known concentration value are not the same if they differ from at least **4%** of the smallest value.

The idea behind the present invention is to check the consistency of measures given at two different times (before and after an engine stop) without modification of the fluid mixture within the tank. If the data provided by the dual-sensing system is consistent from one measure to another measure, separated by a key off - key on sequence of operations, then the system (usually the concentration sensor, considered as more vulnerable) is considered as functioning plausibly. The plausibility principle is that if a first one of the two values occurs again, the likelihood that the second value has changed is low. However, it is to be noted that it is not impossible that a change in the second value only occurs in the fluid mixture. For instance, a change of concentration could theorically occur, for instance if the content of the tank is replaced, without any change of fluid level. This will result in constant level value after key on. This circumstance is deemed very unlikely according to the invention: if only one out of the two physical quantities changes, then something is wrong and the system is not working plausibly.

In a particular embodiment, each ultrasound subsystem comprises:

- a piezoelectric ultrasonic transducer,
- means to measure a duration of a predetermined number of reflections of ultrasonic waves on a distance within the fluid mixture.

In this embodiment, in the first subsystem, there is a reflector and the distance between the transducer and the reflector is a constant value. In the second subsystem, there is no physical element as a reflector but reflection of the ultrasonic waves takes place thanks to the interface of the fluid mixture with the vapor space in the tank. In the second subsystem, the distance between the transducer and the interface represents (i.e. is linked by a one-to-one relation) the level value of the fluid mixture in the tank.

It is proposed to launch the method according to the invention subsequent to the detection of an event indicating that the fluid mixture is in a stable position in the tank. More precisely, the execution of the method is conditioned to the detection that the interface of the fluid mixture with the vapor space in the tank is in a stable position, i.e. the variation of the position of the interface stays within a predetermined variation range.

In a particular embodiment, the distance is used to calculate a speed of sound value (SoS) based on the

following relationship:

$$SoS=DxNx2/T;$$

where

D is the distance;
T is the time measurement for the multiple echo reflection; and
N is the number of reflections.

Then the calculated speed of sound value (SoS) is applied to a look-up table for determining a concentration value.

It is an advantage of the present invention that it provides a robust method for assessing the malfunction of the dual-sensing system, by correlating the memorized and measured concentration and level values. For example, if a deviation is detected between the memorized concentration value and the measured concentration value, it may be concluded that an error of the first ultrasound subsystem is present.

In an alternative embodiment, the speed of sound value determined by the first ultrasound subsystem can be used as such to detect a malfunction of the first ultrasound subsystem. More precisely, in this case, the physical quantity indicative of the concentration is the speed of sound within the fluid mixture.

In another embodiment, which can be combined with the previous embodiment, the physical quantity indicative of the level of fluid mixture is the distance between the transducer and the interface fluid/vapor space in the second subsystem.

According to a combination of these two embodiments of the present invention, the steps of the method are carried out in the following manner:

- on key off: memorizing the last known speed of sound value and distance value;
- on key on:

  • detecting an unchanged position of the interface of the fluid mixture with a vapor space within the tank between key off and key on, by comparing the memorized distance value with a new distance value provided by the dual-sensing system;
  • operating the second ultrasound subsystem for determining a new speed of sound value;
  • determining a malfunction of the first ultrasound subsystem using the first and second speed of sound values.

This alternative embodiment is simpler to implement since it does not make use of a specific look-up table for determining a concentration value.

According to another embodiment of the invention, the physical quantity indicative of the concentration is the duration of a predetermined number of reflections of ultrasonic waves within the fluid mixture on the known distance between the transducer and the reflector of the first subsystem. In other words, in this embodiment, the value of first physical quantity memorized when key off, it is a duration.

According the another embodiment, which can be combined with the previous embodiment, the physical quantity indicative of the level is the duration of a predetermined number of reflections of ultrasonic waves within the fluid mixture on the distance between the transducer and the interface liquid / space vapor in the second subsystem. In other words, in this embodiment, the duration of reflections is memorized as value of the second physical quantity when key off.

It is possible, through a combination of the two above embodiments, to memorize and compare durations only. This combined embodiment is simpler to implement since it does not make use of any specific look-up table nor calculation. The rough values of durations are immediately available for comparison.

In an embodiment, the step of determining whether the last known value of the first physical quantity is the same as the new value of the first physical quantity comprises:

• operating the second ultrasound subsystem in the first sensing mode for determining a first level of fluid mixture at a first time, and a second level of fluid mixture at a second time;
• calculating a deviation value upon the difference between the first and second levels of fluid mixture;
• detecting an unchanged position of said interface when the deviation value does not exceed a predetermined threshold.

It is an advantage of the present invention that it provides a plausibility test of the first ultrasound subsystem, while monitoring the position of the interface.

In a particular embodiment, the fluid mixture is an aqueous urea solution. For example, the aqueous urea solution is stored in a urea tank and is used for SCR (Selective Catalytic Reduction) process.

In another particular embodiment, the fluid mixture is a liquid fuel (diesel, gasoline, etc.)..

According to another aspect of the present invention, it is provided a computer program product comprising code means configured to cause the dual-sensing system, the dual-sensing system comprising a first ultrasound subsystem and a second ultrasound subsystem, to determine the value of a physical quantity indicative of the concentration of a constituent of a fluid mixture within a tank, and to determine the value of a physical quantity indicative of the level of the fluid mixture, and to cause a processor to carry out the steps of a method as described above.

## Brief description of the drawings

The following drawings are illustrative of exemplary embodiments and therefore do not limit the scope of the invention. They are presented to assist in providing a proper understanding of the invention. The present invention will hereinafter be described in conjunction with the accompanying figures, in which:

- Figure 1 is a schematic view of an exemplary embodiment of a vehicle fluid storage system to which the present invention may be applied;
- Figure 2 illustrates a flowchart of operations depicting logical operational steps for detecting a malfunction of the system of figure 1, in accordance with a first particular embodiment of the invention.

## Detailed description of the Invention

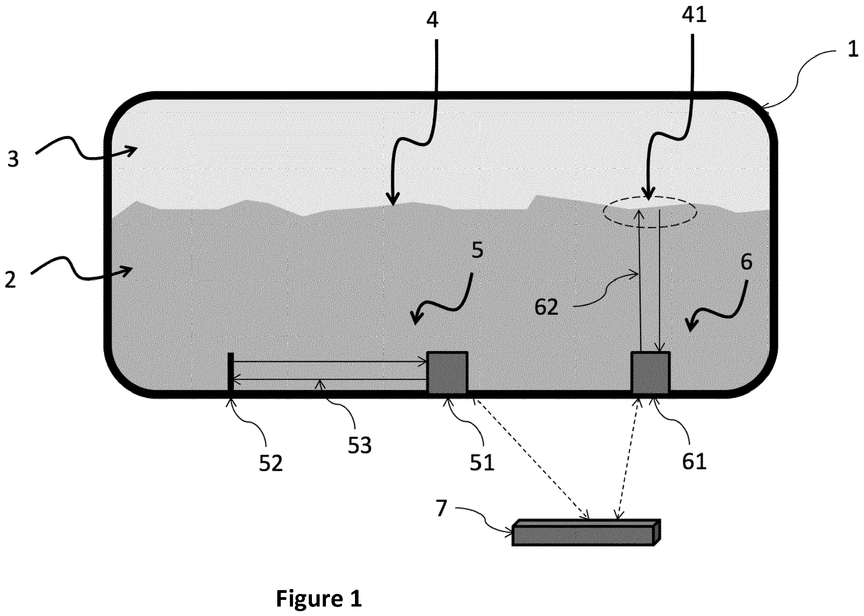

Figure 1 illustrates an exemplary embodiment of a vehicle fluid storage system. As illustrated in the example of Figure 1, the fluid storage system comprises:

- a tank 1 for the storage of a fluid mixture 2, for example aqueous urea solution; and
- a fluid dual-sensing system according to a particular embodiment of the present invention.

When fluid mixture 2 is present in the tank 1, the space not occupied by fluid mixture will be filled with a gas mixture. This space is referred to as the "vapor space" 3. The interface of the fluid mixture with the vapor space is referenced 4.

In the example of Figure 1, the fluid dual-sensing system is designed to provide **two physical quantities,** one quantity indicative of a **concentration** of a constituent of the fluid mixture within the tank and one quantity indicative of a **level** of the fluid mixture within the tank. More specifically, the dual-sensing system comprises:

- a first ultrasound subsystem 5 for determining a physical quantity which is characteristic of the concentration of a constituent of the fluid mixture,
- a second ultrasound subsystem 6 for determining, based on the physical quantity provided by the first ultrasound subsystem, a physical quantity which is characteristic of the level of the fluid mixture within the tank, and
- a controller 7 (also called electronic control unit or ECU).

The first ultrasound subsystem 5 comprises a piezoelectric ultrasonic transducer 51 and a reflector 52. The reflector 52 is located at a known distance from the transducer 51. Ultrasonic sound waves 53 generated by the transducer 51 propagate through the fluid mixture 2 and are reflected off the reflector 52 back towards the transducer 51. The reflected ultrasonic sound wave 53 is detected by transducer 51, and reflects off the transducer 51 back towards the reflector 52. The ultrasonic sound wave 53 can travel back and forth between the reflector 52 and the transducer 51 a predetermined number of times. The concentration results from a computation based on the speed of sound in the fluid mixture. The controller calculates a speed of sound value using the known distance value between transducer 51 and reflector 52 and the measured duration of ultrasonic reflections. The controller 7 applies the calculated speed of sound value to a look-up table for determining an estimated concentration value. The skilled person will be able to produce the required look-up table through routine experiments. The use of pulse-echo method (i.e. speed of sound technique) for determining the concentration/quality of a fluid mixture is well known and will not be described in any further detail.

The second ultrasound subsystem 6 comprises a piezoelectric ultrasonic transducer 61 positioned such that ultrasonic sound waves 62 produced by the transducer reflect off a zone 41 of the interface 4. The use of pulse-echo method (i.e. speed of sound technique) for determining the level of a fluid mixture in a tank is well known and will not be described in any further detail.

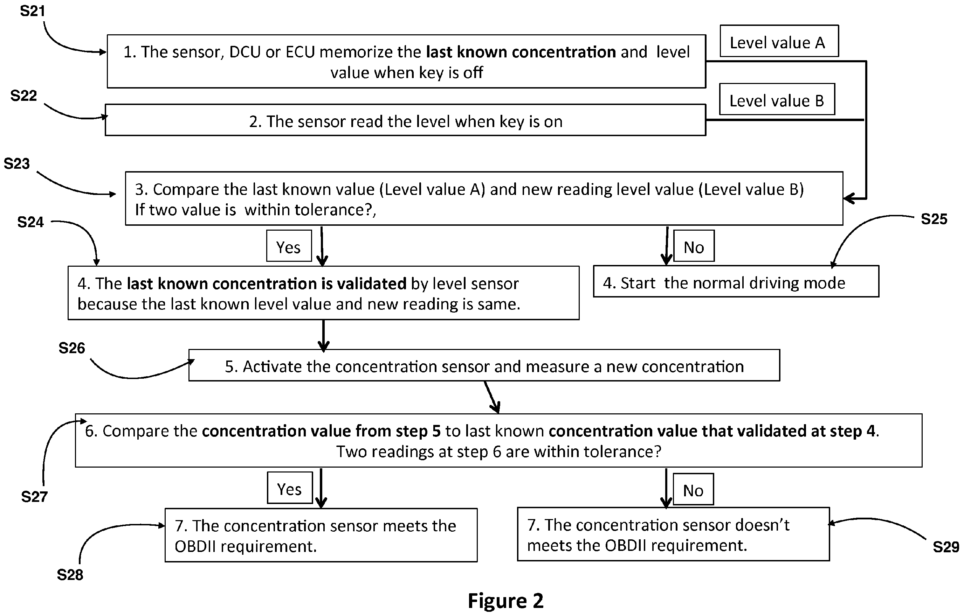

The controller 7 includes a series of computer-executable instructions, as described below in relation to Figure 2, which allow the controller to determine a malfunction of the first ultrasound subsystem 5. These instructions may reside, for example, in a RAM of the controller. Alternatively, the instructions may be contained on a data storage device with a computer readable medium (for example, USB key or CD-ROM).

Figure 2 illustrates a malfunction test according to a particular embodiment of the invention. More precisely, Figure 2 illustrates a flowchart of instructions depicting logical operational steps for detecting a malfunction of the first ultrasound subsystem (i.e. quality sensor), in accordance with a particular embodiment of the invention.

Beginning at step S21, the sensor, DCU (drive control unit) or ECU memorizes the last known concentration and level value when key off.

The controller 7 detects a vehicle key-off event. The controller 7 operates the dual-sensing system 6 for determining a first level of fluid mixture in the tank (Level value A). This first level value is obtained by measuring a reflection duration between transducer 51 and reflector 52 in the subsystem 5 and deducing from a look-up table the concentration of a constituent in the fluid mixture, then providing this concentration value to subsystem 6. Subsystem 6 measures a reflection duration between transducer 61 and interface 41 and deduces from this measure and from the concentration the distance between transducer 51 and interface 41. This distance allows to calculate the level of fluid mixture in the tank. This level is stored in a memory.

At step S22, the controller 7 detects a vehicle key-on event. The controller 7 operates again the dual-sensing system for determining a second level of fluid mixture in the tank (Level value B).

Then at step S23, the controller 7 determines whether the fluid mixture is in a stable position in the tank. To that purpose, the controller compares the first level (Level value A) and the second level (Level value B) and, for example, calculates a deviation value between the first level (Level value A) and the second level (Level value B). For example, the deviation value is compared to a predetermined threshold value. For example, the controller is configured to detect a stable position of the fluid mixture when the deviation value does not exceed the predetermined threshold value. If a stable position is detected, then the controller continues at step S24. If a stable position is not detected, then the malfunction test stops.

At step S24, the last known concentration is considered as validated by level sensor because the last known level value and new reading are the same. The consistency check (also called plausibility check) can take place.

At step S26, the subsystem 5 is activated by the controller and the subsystem 5 provides a new value of the concentration..

At step S27, the controller compares the new concentration value and the last known concentration value. For example, the controller calculates a deviation value between the effective concentration value and the last known concentration value. For example, the deviation value is compared to a predetermined threshold value. For example, the controller is configured to detect (step S27) a malfunction of the first ultrasound subsystem 5 when the deviation value exceeds the predetermined threshold value.

As a summary, out the two physical quantities:

• the quantity indicative of a concentration of a constituent of the fluid mixture within the tank can be, not limitatively:

  - the concentration value itself,
  - the duration of ultrasonic wave reflections taking place in the fluid mixture on a known distance,
  - the speed of the sound in the fluid mixture.

• and the quantity indicative of a level of the fluid mixture within the tank can be, without being limited to:

  - the level itself,
  - the distance between a transducer and the interface between the fluid mixture and vapor space above the fluid mixture,
  - the duration of ultrasonic wave reflections taking place in the fluid mixture between a transducer and the interface between the fluid mixture and vapor space above the fluid mixture.

Although the invention has been described hereinabove by reference to specific embodiments, this is done for illustrative and not for limiting purposes.

**Claims**

1. Method for detecting a malfunction of a dual-sensing system for sensing a fluid mixture (2) stored in a tank (1) of a vehicle, the dual-sensing system being able to provide values of **two physical quantities,** i.e. one quantity indicative of a concentration of a constituent of the fluid mixture within the tank and one quantity indicative of a level of the fluid mixture within the tank, the dual-sensing system comprising:

   - a first ultrasound subsystem (5) for determining the value of the physical quantity indicative of the concentration of the constituent of the fluid mixture; and
   - a second ultrasound subsystem (6) for determining, based on the value provided by the first ultrasound subsystem, the value of the physical quantity indicative of the level of the fluid mixture within the tank,

   the method comprises the steps of:

   - when key is off: memorizing the last known value of a first physical quantity out of the two physical quantities and the last known value of a second physical quantity out of the two physical quantities;
   - when key is on, sequentially:

      - having new values of the two physical quantities provided by the dual-sensing system;
      - if the last known value of the first physical quantity is not the same as the new value of the first physical quantity, stop the carrying out of the method;
      - If the last known value of the first physical quantity is the same as the new value of the first physical quantity and if the last known value of the second physical quantity is not the same as the new value of the second physical quantity, emitting a signal indicative of malfunctioning.

2. Method according to the preceding claim, wherein each ultrasound subsystem comprises:

   • a piezoelectric ultrasonic transducer (51, 61),
   • means to measure a duration of a predetermined number of reflections of ultrasonic waves on a distance within the fluid mixture.

3. Method according to any one of the preceding claims, wherein, in the first subsystem (5), there is a reflector (52) and the distance between the transducer (51) and the reflector (52) is a constant value, and, in the second subsystem (6), there is no physical element as a reflector but reflection of the ultrasonic waves takes place thanks to the interface (4) of the fluid mixture (2) with the vapor space (3) in the tank (1).

4. Method according to any one of the preceding claims, wherein the physical quantity indicative of the concentration is the **concentration** itself and the physical quantity indicative of the level is the **level** itself.

5. Method according to the preceding claim, the steps of which are carried out in this manner:

   - when key is off: memorizing the last known concentration and last know level of the fluid mixture within the tank;
   - when key is on, sequentially:

      a) having a new level determined by the dual-sensing system;
      b) if the new level and memorized last known level are not the same, stop the carrying out of the method;
      c) having a new concentration value determined by the first ultrasound subsystem (5) ;
      d) if the last known concentration value and new concentration value are not the same, emitting a malfunction signal indicative of a malfunction.

6. Method according to any one of claims 1 to 3, wherein the physical quantity indicative of the concentration is the **speed of sound** within the fluid mixture (2).

7. Method according to any one of claims 1 to 3 and 6, wherein the physical quantity indicative of the level of fluid mixture (2) is the **distance** between the transducer (61) and the interface (4) fluid/vapor space in the second subsystem (6).

8. Method according to claims 6 and 7, wherein the steps of the method are carried out in the following manner:

   - when key is off: memorizing the last known speed of sound value and distance value;
   - when key is on, sequentially::

      • detecting an unchanged position of the interface (4) of the fluid mixture (2) with a vapor space (3) within the tank (1) between key off and key on, by comparing the memorized distance value with a new distance value provided by the dual-sensing system;
• operating the second ultrasound subsystem (6) for determining a new speed of sound value;
• determining a malfunction of the first ultrasound subsystem (5) using the first and second speed of sound values.

9. Method according to any one of claims 1 to 3, wherein the physical quantity indicative of the concentration is the **duration** of a predetermined number of reflections of ultrasonic waves within the fluid mixture on the known distance between the transducer (51) and the reflector (52) of the first subsystem (5).

10. Method according to any one of claims 1 to 3 and 9, wherein the physical quantity indicative of the level is the **duration** of a predetermined number of reflections of ultrasonic waves within the fluid mixture on the distance between the transducer (61) and the interface (4) liquid / space vapor in the second subsystem (6).

11. Method according to any of claims 1 to 10, wherein the fluid mixture (2) is an aqueous urea solution.

12. Computer program product comprising code means configured to cause a dual-sensing system, the dual-sensing system comprising a first ultrasound subsystem (5) and a second ultrasound subsystem (6), to determine the value of a physical quantity indicative of the concentration of a constituent of a fluid mixture within a tank, and to determine the value of a physical quantity indicative of the level of the fluid mixture, and to cause a processor to carry out the steps of the method according to any one of claims 1 to 11.

**Patentansprüche**

1. Verfahren zur Erkennung eine Fehlfunktion eines Dual-Sensing-Systems eines Fluidgemisches (2) zum Erfassen, dass in einem Tank (1) eines Fahrzeugs gespeicherten ist, wobei das Dual-Sensing-System Werte von zwei physikalischen Größen liefern kann, d.h. eine Größe, die eine Konzentration eines Bestandteils des Fluidgemisches innerhalb des Tanks anzeigt und eine Größe, die einen Füllstand des Fluidgemisches innerhalb des Tanks anzeigt, wobei das Dual-Sensing-System umfasst:

- ein erstes Ultraschall-Teilsystem (5) zur Bestimmung des Wertes der physikalischen Größe, der die Konzentration des Bestandteils des Fluidgemisches angibt; und
- ein zweites Ultraschall-Teilsystem (6) zur Bestimmung des Wertes der physikalischen Größe, die den Füllstand des Fluidgemisches im Tank angibt, basierend auf dem Wert, der vom ersten Ultraschall-Teilsystem bereitgestellt wird;

Das Verfahren umfasst die folgenden Schritte:

- wenn der Schlüssel auf AUS-Position steht: Speichern des letzten bekannten Werts einer ersten physikalischen Größe aus den beiden physikalischen Größen und des letzten bekannten Werts einer zweiten physikalischen Größe aus den beiden physikalischen Größen;
- wenn der Schlüssel auf ON steht, nacheinander:

• neue Werte der beiden vom Dual-Sensing-System bereitgestellten physikalischen Größen haben;
• wenn der letzte bekannte Wert der ersten physikalischen Größe nicht mit dem neuen Wert der ersten physikalischen Größe übereinstimmt, die Durchführung der Methode stoppen.
• wenn der letzte bekannte Wert der ersten physikalischen Größe mit dem neuen Wert der ersten physikalischen Größe übereinstimmt und der letzte bekannte Wert der zweiten physikalischen Größe nicht mit dem neuen Wert der zweiten physikalischen Größe übereinstimmt, eines Signal senden, das auf eine Fehlfunktion hinweist.

2. Verfahren nach dem vorhergehenden Anspruch, wobei jedes Ultraschall-Teilsystem umfasst:

- einen piezoelektrischen Ultraschallwandler (51, 61),
- ein Mittel zur Messung eine Dauer einer vorbestimmten Anzahl von Reflexionen von Ultraschallwellen auf einer Entfernung innerhalb des Fluidgemisches zu messen.

3. Verfahren nach einem der vorhergehenden Ansprüche, wobei in dem ersten Teilsystem (5) ein Reflektor (52) vorhanden ist und der Abstand zwischen dem Wandler (51) und dem Reflektor (52) ein konstanter Wert ist und in dem zweite Teilsystem (6), gibt es kein physikalisches Element als Reflektor, aber die Reflexion der Ultraschallwellen erfolgt dank der Grenzfläche (4) des Fluidgemisches (2) mit dem Dampfraum (3) tank (1).

4. Verfahren nach einem der vorhergehenden Ansprüche, wobei die physikalische Größe, die die Konzentration anzeigt, die Konzentration selbst ist und die physikalische Größe, die der Füllstand anzeigt, der Füllstand selbst ist.

5. Verfahren nach dem vorhergehenden Anspruch, dessen Schritte auf diese Weise ausgeführt werden:

- wenn der Schlüssel auf AUS-Position steht: Speichern der letzten bekannten Konzentration und des letzten bekannten Füllstands des Flüssigkeitsgemisches im Tank;
- wenn der Schlüssel auf ON steht, nacheinander:

  • ein neuer Füllstand haben, das vom Dual-Sensing-System bestimmt wird;
  • wenn der neue Füllstand und der gespeicherte letzte bekannte Füllstand nicht identisch sind, die Durchführung der Methode beenden.
  • einen neuen Konzentrationswert haben, der vom ersten Ultraschall-Teilsystem (5) bestimmt wird;
  • wenn der letzte bekannte Konzentrationswert und der neue Konzentrationswert nicht identisch sind, wird ein Störungssignal ausgeschickt, das auf eine Fehlfunktion hinweist.

6. Verfahren nach einem der Ansprüche 1 bis 3, wobei die physikalische Größe, die die Konzentration anzeigt, die Schallgeschwindigkeit innerhalb des Fluidgemisches (2) ist.

7. Verfahren nach einem der Ansprüche 1 bis 3 und 6, wobei die physikalische Größe, die den Füllstand des Fluidgemisches (2) angibt, der Abstand zwischen dem Wandler (61) und dem Grenzfläche (4) Fluid/Dampfraum in dem zweiten Teilsystem ist (6).

8. Verfahren nach den Ansprüchen 6 und 7, wobei die Schritte des Verfahrens auf folgende Weise ausgeführt werden:

- wenn der Schlüssel auf AUS-Position steht: Speichern der letzten bekannten Schallgeschwindigkeit und des Abstandswerts;
- wenn der Schlüssel auf ON steht, nacheinander:

  • erkennen einer unveränderten Position der Grenzfläche (4) des Fluidgemisches (2) mit einem Dampfraum (3) innerhalb de Tank (1) zwischen Schlüssel auf AUS-Position und Schlüssel auf ON, indem der gespeicherte Abstandswert mit einem neuen bereitgestellten Abstandswert verglichen wird durch das Dual-Sensing-System;
  • betreiben des zweiten Ultraschall-Teilsystems (6) zur Bestimmung einer neuen Schallgeschwindigkeit;
  • bestimmen einer Fehlfunktion des ersten Ultraschall-Subsystems (5) unter Verwendung der ersten und zweiten Schallgeschwindigkeit.

9. Verfahren nach einem der Ansprüche 1 bis 3, wobei die physikalische Größe, die die Konzentration anzeigt, die Dauer einer vorbestimmten Anzahl von Reflexionen von Ultraschallwellen innerhalb des Fluidgemisches auf dem bekannten Abstand zwischen dem Wandler (51) und dem Reflektor (52) des ersten Teilsystems (5) ist.

10. Verfahren nach einem der Ansprüche 1 bis 3 und 9, wobei die physikalische Größe, die den Füllstand angibt, die Dauer einer vorbestimmten Anzahl von Reflexionen von Ultraschallwellen innerhalb des Fluidgemisches auf den Abstand zwischen dem Wandler (61) und der Grenzfläche (4) Flüssigkeit / Raumdampf im zweiten Teilsystem (6) ist.

11. Verfahren nach einem der Ansprüche 1 bis 10, wobei das Fluidgemisch (2) eine wässrige Harnstofflösung ist.

12. Computerprogrammprodukt mit Codemitteln, die konfiguriert sind, um ein Dual-Sensing-System zu führen, wobei das Dual-Sensing-System ein erstes Ultraschall-Teilsystem (5) und ein zweites Ultraschall-Teilsystem (6) umfasst, um den Wert einer physikalischen Größe zu bestimmen, die die Konzentration von anzeigt einen Bestandteil eines Fluidgemisches innerhalb eines Tanks und des Wertes einer physikalischen Größe zum Bestimmen, die den Füllstand des Fluidgemisches angibt, und eine Prozessor zum Veranlassen, die Schritte des Verfahrens gemäß einem der Ansprüche 1 bis 11 auszuführen .

**Revendications**

1. Procédé de détection d'un dysfonctionnement d'un système à double détection pour détecter un mélange fluidique (2) stocké dans un réservoir (1) d'un véhicule, le système à double détection étant capable de fournir des valeurs de deux quantités physiques, c'est-à-dire une quantité indicative d'une concentration d'un constituant du mélange fluidique dans le réservoir et une quantité indicative d'un niveau du mélange fluidique dans le réservoir, le système à double détection comprenant:

- un premier sous-système à ultrasons (5) pour déterminer la valeur de la quantité physique indicative de la concentration du constituant du mélange fluidique ; et

- un deuxième sous-système à ultrasons (6) pour déterminer, sur la base de la valeur fournie par le premier sous-système à ultrasons, la valeur de la quantité physique indicative du niveau du mélange fluidique à l'intérieur du réservoir,

le procédé comprend les étapes de:

- - lorsque la clé est en position OFF : mémorisation de la dernière valeur connue d'une première quantité physique parmi les deux quantités physiques et la dernière valeur connue d'une deuxième quantité physique parmi les deux quantités physiques;

- - lorsque la clé est en position ON, séquentiellement:

     • • avoir de nouvelles valeurs des deux quantités physiques fournies par le système à double détection;
     • • si la dernière valeur connue de la première quantité physique n'est pas la même que la nouvelle valeur de la première quantité physique, arrêter la mise en œuvre de la méthode;
     • • si la dernière valeur connue de la première quantité physique est la même que la nouvelle valeur de la première quantité physique et si la dernière valeur connue de la deuxième quantité physique n'est pas la même que la nouvelle valeur de la deuxième quantité physique, émettre un signal indiquant un dysfonctionnement.

**2.** Procédé selon la revendication précédente, dans lequel chaque sous-système à ultrasons comprend:

     - un transducteur ultrasonique piézoélectrique (51, 61),
     - des moyens pour mesurer une durée d'un nombre prédéterminé de réflexions d'ondes ultrasonores à une distance au sein du mélange fluidique.

**3.** Procédé selon l'une quelconque des revendications précédentes, dans lequel, dans le premier sous-système (5), il y a un réflecteur (52) et la distance entre le transducteur (51) et le réflecteur (52) est une valeur constante, et, dans le second sous-système (6), il n'y a pas d'élément physique comme un réflecteur mais la réflexion des ondes ultrasonores a lieu à l'interface (4) du mélange fluidique (2) avec l'espace vapeur (3) du réservoir (1).

**4.** Procédé selon l'une quelconque des revendications précédentes, dans lequel la quantité physique indicative de la concentration est la concentration elle-même et la quantité physique indicative du niveau est le niveau lui-même.

**5.** Procédé selon la revendication précédente, dont les étapes sont réalisées de cette manière:

     - lorsque la touche est éteinte: mémorisation de la dernière concentration connue et du dernier niveau connu du mélange fluidique à l'intérieur du réservoir;
     - lorsque la clé est en position ON, séquentiellement:

         • avoir un nouveau niveau déterminé par le système à double détection;
         • si le nouveau niveau et le dernier niveau connu mémorisé ne sont pas les mêmes, arrêter l'exécution de la méthode;
         • avoir une nouvelle valeur de concentration déterminée par le premier sous-système à ultrasons (5);
         • si la dernière valeur de concentration connue et la nouvelle valeur de concentration ne sont pas les mêmes, émettre un signal de dysfonctionnement indiquant un dysfonctionnement.

**6.** 6. Procédé selon l'une quelconque des revendications 1 à 3, dans lequel la quantité physique indicative de la concentration est la vitesse du son dans le mélange fluidique (2).

**7.** Procédé selon l'une quelconque des revendications 1 à 3 et 6, dans lequel la quantité physique indicative du niveau de mélange fluidique (2) est la distance entre le transducteur (61) et l'interface (4) fluide/espace vapeur dans le deuxième sous-système (6).

**8.** Procédé selon les revendications 6 et 7, dans lequel les étapes du procédé sont effectuées de la manière suivante:

     - lorsque la clé est en position OFF: mémorisation de la dernière valeur connue de vitesse du son et de distance;
     - lorsque la clé est en position ON, séquentiellement:

         • • détection d'une position inchangée de l'interface (4) du mélange fluidique (2) avec l'espace vapeur (3) à l'intérieur du réservoir (1) entre la clé en position OFF et la clé en position ON, en comparant la valeur de distance mémorisée avec une nouvelle valeur de distance fournie par le système à double détection;
         • faire fonctionner le deuxième sous-système à ultrasons (6) pour déterminer une nouvelle valeur de vitesse du son;

• déterminer un dysfonctionnement du premier sous-système à ultrasons (5) en utilisant la première et la seconde valeur de vitesse du son.

9. Procédé selon l'une quelconque des revendications 1 à 3, dans lequel la quantité physique indicative de la concentration est la durée d'un nombre prédéterminé de réflexions d'ondes ultrasonores à l'intérieur du mélange fluidique sur la distance connue entre le transducteur (51) et le réflecteur (52) du premier sous-système (5).

10. Procédé selon l'une quelconque des revendications 1 à 3 et 9, dans lequel la quantité physique indicative du niveau est la durée d'un nombre prédéterminé de réflexions d'ondes ultrasonores dans le mélange fluidique sur la distance entre le transducteur (61) et l'interface (4) liquide/espace vapeur dans le deuxième sous-système (6).

11. Procédé selon l'une quelconque des revendications 1 à 10, dans lequel le mélange fluidique (2) est une solution aqueuse d'urée.

12. Programme d'ordinateur comprenant un code configuré pour entraîner un système à double détection, ledit système à double détection comprenant un premier sous-système à ultrasons (5) et un second sous-système à ultrasons (6), pour déterminer la valeur d'une quantité physique indicative de la concentration d'un constituant d'un mélange fluidique dans un réservoir, et pour déterminer la valeur d'une quantité physique indicative du niveau dudit mélange fluidique, et pour amener un processeur à exécuter les étapes du procédé selon l'une quelconque des revendications 1 à 11 .

**Figure 1**

EP 3 482 198 B1

**S21**

1. The sensor, DCU or ECU memorize the **last known concentration** and level value when key is off

Level value A

**S22**

2. The sensor read the level when key is on

Level value B

**S23**

3. Compare the last known value (Level value A) and new reading level value (Level value B) If two value is within tolerance?,

**S25**

**S24**

Yes

No

4. The **last known concentration is validated** by level sensor because the last known level value and new reading is same.

4. Start the normal driving mode

**S26**

5. Activate the concentration sensor and measure a new concentration

6. Compare the **concentration value from step 5** to last known **concentration value that validated at step 4**. Two readings at step 6 are within tolerance?

**S27**

Yes

No

7. The concentration sensor meets the OBDII requirement.

7. The concentration sensor doesn't meets the OBDII requirement.

**S29**

**S28**

**Figure 2**

EP 3 482 198 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8733153 B2